(19) **Europäisches Patentamt European Patent Office Office européen des brevets**

(11) **EP 4 596 996 A1**

(12) **EUROPEAN PATENT APPLICATION**
published in accordance with Art. 153(4) EPC

(43) Date of publication:
**06.08.2025 Bulletin 2025/32**

(21) Application number: **23872228.4**

(22) Date of filing: **25.09.2023**

(51) International Patent Classification (IPC):
**F25B 1/00** $^{(2006.01)}$      **F25B 43/00** $^{(2006.01)}$

(52) Cooperative Patent Classification (CPC):
**F25B 1/00; F25B 43/00**

(86) International application number:
**PCT/JP2023/034635**

(87) International publication number:
**WO 2024/071003 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022155366**

(71) Applicant: **DAIKIN INDUSTRIES, LTD.**
**Osaka-shi, Osaka 530-0001 (JP)**

(72) Inventors:
• **IWATA, Ikuhiro**
  **Osaka-shi, Osaka 530-0001 (JP)**
• **KUMAKURA, Eiji**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **REFRIGERATION CYCLE DEVICE**

(57) A refrigeration cycle apparatus (100) includes a compressor (21), a utilization-side heat exchanger (31), a heat source-side expansion valve (25), a heat source-side heat exchanger (23), an accumulator (26), and a main refrigerant circuit (10). A non-azeotropic refrigerant mixture is sealed in the main refrigerant circuit (10). A first value obtained by dividing a value obtained by subtracting a second amount from a first amount by the first amount exceeds a value determined in accordance with a mixed refrigerant. The first amount is an amount of the mixed refrigerant sealed in the main refrigerant circuit (10). The second amount is an amount of a liquid refrigerant stored in the accumulator (26).

FIG. 5

EP 4 596 996 A1

# Description

## TECHNICAL FIELD

The present disclosure relates to a refrigeration cycle apparatus.

## BACKGROUND ART

Conventionally, there is known a refrigeration cycle apparatus using a non-azeotropic refrigerant mixture. Patent Literature 1 (JP2015-200431A) discloses an air-conditioning apparatus that is a refrigeration cycle apparatus including an accumulator connected to the suction side of a compressor and using a non-azeotropic refrigerant mixture obtained by mixing a low-boiling-point refrigerant and a high-boiling-point refrigerant.

## SUMMARY

<Technical Problem>

In such a refrigeration cycle apparatus, an excessive refrigerant stored in the accumulator tends to be a liquid refrigerant containing a large amount of high-boiling-point refrigerant, and a circulating refrigerant circulating in a refrigerant circuit of the refrigeration cycle apparatus tends to be a refrigerant containing a large amount of low-boiling-point refrigerant. Therefore, the composition of the circulating refrigerant may deviate from the base composition of the non-azeotropic refrigerant mixture, which may deteriorate the heat exchange performance and the controllability of the refrigeration cycle apparatus.

<Solution to Problem>

A refrigeration cycle apparatus of a first aspect includes a compressor, a condenser, an expansion mechanism, an evaporator, an accumulator, and a refrigerant circuit. In the refrigerant circuit, the compressor, the condenser, the expansion mechanism, the evaporator, and the accumulator are connected in a ring shape. A mixed refrigerant is sealed in the refrigerant circuit. The mixed refrigerant is a non-azeotropic refrigerant mixture. A first value obtained by dividing a value obtained by subtracting a second amount from a first amount by the first amount exceeds a value determined in accordance with a mixed refrigerant. The first amount is an amount of the mixed refrigerant sealed in the refrigerant circuit. The second amount is an amount of a liquid refrigerant stored in the accumulator.

In the refrigeration cycle apparatus of the first aspect, the amount of the liquid refrigerant stored in the accumulator is limited in accordance with the kind and amount of a refrigerant sealed in the refrigerant circuit. This suppresses the deviation of the composition of the refrigerant circulating in the refrigerant circuit from the base composition of the non-azeotropic refrigerant mixture sealed in the refrigerant circuit.

A refrigeration cycle apparatus of a second aspect is the refrigeration cycle apparatus of the first aspect, in which the second amount is a product of an effective volume of the accumulator and a saturated liquid density of the mixed refrigerant at a pressure of the mixed refrigerant sucked into the compressor.

A refrigeration cycle apparatus of a third aspect is the refrigeration cycle apparatus of the first aspect or the second aspect, in which the mixed refrigerant sealed in the refrigerant circuit has a first composition. When the liquid refrigerant is stored in the accumulator, the mixed refrigerant circulating in the refrigerant circuit has a second composition, the first value is set such that a second value obtained by subtracting T1 from T3 is equal to or smaller than 1K. T1 is a saturated liquid temperature of the mixed refrigerant having the first composition. T2 is a target value of a temperature of the mixed refrigerant having the first composition at an outlet of the condenser. T3 is a saturated liquid temperature of the mixed refrigerant having the second composition after a composition of the mixed refrigerant is changed from the first composition to the second composition in a case where the temperature of the mixed refrigerant at the outlet of the condenser is controlled to T2.

In the refrigeration cycle apparatus of the third aspect, the amount of the liquid refrigerant stored in the accumulator is set such that the change amount of temperature glide at the time of deviation of the composition of the refrigerant circulating in the refrigerant circuit from the base composition is equal to or smaller than a predetermined value. The temperature glide is a difference between a saturated gas temperature of the refrigerant and a saturated liquid temperature of the refrigerant. This suppresses the deviation of the composition of the refrigerant circulating in the refrigerant circuit from the base composition.

A refrigeration cycle apparatus of a fourth aspect is the refrigeration cycle apparatus of any one of the first to third aspects, in which the mixed refrigerant contains 21.5 mass% of R32 and 78.5 mass% of R1234yf. The first value exceeds 0.65.

A refrigeration cycle apparatus of a fifth aspect is the refrigeration cycle apparatus of any one of the first to third aspects, in which the mixed refrigerant contains 23.0 mass% of R1132(E) and 77.0 mass% of R1234yf. The first value exceeds 0.15.

A refrigeration cycle apparatus of a sixth aspect is the refrigeration cycle apparatus of any one of the first to third aspects, in which the mixed refrigerant contains 22.0 mass% of R1132(E), 56.0 mass% of R1234yf, and 22.0 mass% of R32. The first value exceeds 0.22.

A refrigeration cycle apparatus of a seventh aspect is the refrigeration cycle apparatus of any one of the first to third aspects, in which the mixed refrigerant contains 34.0 mass% of R1123 and 66.0 mass% of R1234yf. The first value exceeds 0.12.

A refrigeration cycle apparatus of an eighth aspect is the refrigeration cycle apparatus of any one of the first to seventh aspects, further including a control unit configured to control a parameter related to wetness of the mixed refrigerant at an inlet of the accumulator.

The refrigeration cycle apparatus of the eighth aspect suppresses the deviation of the composition of the refrigerant circulating in the refrigerant circuit from the base composition by, for example, controlling the opening degree of the expansion mechanism.

A refrigeration cycle apparatus of a ninth aspect is the refrigeration cycle apparatus of any one of the first to eighth aspects, in which the accumulator has an effective volume equal to or smaller than a predetermined value.

The refrigeration cycle apparatus of the ninth aspect suppresses the deviation of the composition of the refrigerant circulating in the refrigerant circuit from the base composition by, for example, setting an upper limit value of the effective volume of the accumulator.

## BRIEF DESCRIPTION OF THE DRAWINGS

[Fig. 1] Fig. 1 is a diagram illustrating an example of the entire configuration of a refrigeration cycle apparatus 100.
[Fig. 2] Fig. 2 is a block diagram of a control unit 70.
[Fig. 3] Fig. 3 is a Mollier diagram of R454C.
[Fig. 4] Fig. 4 is a vapor-liquid equilibrium curve of a mixed refrigerant of R32 and R1234yf.
[Fig. 5] Fig. 5 is a diagram showing the relation between the R32 content and the temperature glide for the mixed refrigerant of R32 and R1234yf.
[Fig. 6] Fig. 6 is a diagram showing the relation between the refrigerant quality and the R32 content in the circulating refrigerant in the case of using R454C.
[Fig. 7] Fig. 7 is a diagram for explaining the decrease amount of the temperature glide.
[Fig. 8] Fig. 8 is a diagram showing an example of the entire configuration of a refrigeration cycle apparatus 200 that is a testing machine for measuring the composition of a circulating refrigerant.

## DESCRIPTION OF EMBODIMENTS

(1) Configuration of refrigeration cycle apparatus 100

The refrigeration cycle apparatus 100 is an air-conditioning apparatus that performs a vapor compression refrigeration cycle to perform a cooling operation and a heating operation for a predetermined air-conditioning target space.

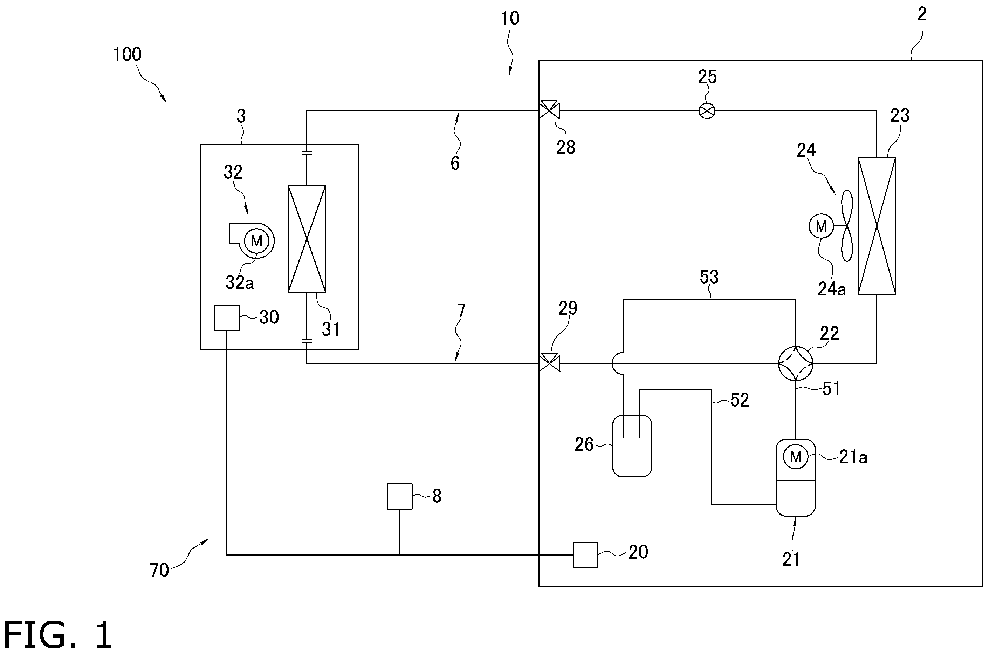

As shown in Fig. 1, the refrigeration cycle apparatus 100 mainly includes a heat source unit 2, a utilization unit 3, a liquid-side refrigerant connection pipe 6, a gas-side refrigerant connection pipe 7, a remote controller 8, and a control unit 70. In the refrigeration cycle apparatus 100, the heat source unit 2 and the utilization unit 3 are connected to each other via the liquid-side refrigerant connection pipe 6 and the gas-side refrigerant connection pipe 7 to form a main refrigerant circuit 10 in which a refrigerant circulates.

The refrigeration cycle apparatus 100 performs a vapor compression refrigeration cycle in which a refrigerant sealed in the main refrigerant circuit 10 is compressed, condensed, depressurized, evaporated, and then compressed again.

The refrigeration cycle apparatus 100 may include a plurality of utilization units 3. In this case, the plurality of utilization units 3 are connected in parallel to one heat source unit 2 to form the main refrigerant circuit 10.

The refrigerant sealed in the main refrigerant circuit 10 is a non-azeotropic refrigerant mixture. The non-azeotropic refrigerant mixture is a mixture of a plurality of kinds of refrigerants having mutually different boiling points.

(1-1) Heat source unit 2

The heat source unit 2 is installed outdoors, such as outside a building having an air-conditioning target space. As shown in Fig. 1, the heat source unit 2 mainly includes a compressor 21, a four-way switching valve 22, a heat source-side heat exchanger 23, a heat source-side fan 24, a heat source-side expansion valve 25, an accumulator 26, a liquid-side shutoff valve 28, and a gas-side shutoff valve 29.

The compressor 21 is a device that compresses a low-pressure refrigerant to a high pressure in the refrigeration cycle. The compressor 21 has a hermetic structure in which a variable displacement compression element (not shown) of rotary-type, scroll-type, or the like is rotationally driven by a compressor motor 21a. In the compressor motor 21a, the driving frequency (the number of rotations of the compressor 21) can be controlled by an inverter.

The four-way switching valve 22 switches the connection state of the main refrigerant circuit 10 so as to mutually switch a cooling operation connection state and a heating operation connection state. In the cooling operation connection state (the state indicated by the dotted line in Fig. 1), the discharge side of the compressor 21 and the gas side of the heat source-side heat exchanger 23 are connected, and the suction side of the compressor 21 and the gas-side shutoff valve 29 are connected. In the heating operation connection state (the state indicated by the solid line in Fig. 1), the discharge side of the compressor 21 and the gas-side shutoff valve 29 are connected, and the suction side of the compressor 21 and the gas side of the heat source-side heat exchanger 23 are connected. One of the connection ports of the four-way switching valve 22 is connected to the discharge side of the compressor 21 via a first pipe 51.

The heat source-side heat exchanger 23 functions as a radiator (condenser) for a high-pressure refrigerant in the refrigeration cycle during the cooling operation, and functions as a heat absorber (evaporator) for a low-pressure refrigerant in the refrigeration cycle during the heating operation.

The heat source-side fan 24 generates an air flow in the heat source unit 2 for supplying air (outside air or the like) outside the air-conditioning target space into the heat source-side heat exchanger 23, causing the air to be heat-exchanged with a refrigerant in the heat source-side heat exchanger 23, and then discharging the air to the outside of the heat source unit 2. The heat source-side fan 24 is rotationally driven by a heat source-side fan motor 24a.

The heat source-side expansion valve 25 is a throttle mechanism having a function of decompressing a refrigerant. The heat source-side expansion valve 25 is provided between the liquid side of the heat source-side heat exchanger 23 and the liquid-side shutoff valve 28. The heat source-side expansion valve 25 is an electric expansion valve whose opening degree can be adjusted by the control of the control unit 70.

The accumulator 26 is provided between the suction side of the compressor 21 and one of the connection ports of the four-way switching valve 22. When the main refrigerant circuit 10 is in the heating operation connection state, the accumulator 26 is provided between the compressor 21 and the heat source-side heat exchanger 23. An end portion of a second pipe 52 connected to the suction side of the compressor 21 and an end portion of a third pipe 53 connected to one of the connection ports of the four-way switching valve 22 are disposed inside the accumulator 26. The second pipe 52 and the third pipe 53 are connected to each other via the accumulator 26.

The accumulator 26 is a refrigerant container capable of temporarily storing an excessive refrigerant in the main refrigerant circuit 10 as a liquid refrigerant. The refrigerant circulating in the main refrigerant circuit 10 flows through the third pipe 53 and flows into the accumulator 26. The refrigerant stored in the accumulator 26 flows out of the accumulator 26 and flows through the second pipe 52.

The liquid-side shutoff valve 28 is a manual valve disposed at a connection portion of the heat source unit 2 with the liquid-side refrigerant connection pipe 6.

The gas-side shutoff valve 29 is a manual valve disposed at a connection portion of the heat source unit 2 with the gas-side refrigerant connection pipe 7.

The heat source unit 2 includes a heat source unit controller 20 that controls the operation of each component forming the heat source unit 2. The heat source unit controller 20 forms the control unit 70. The heat source unit controller 20 is, for example, a microcomputer including a CPU, a memory, and the like. The heat source unit controller 20 is connected to a utilization unit controller 30 of the utilization unit 3 via a communication line, and transmits and receives control signals and the like.

(1-2) Utilization unit 3

The utilization unit 3 is installed on a wall, a ceiling, or the like of a room or the like that is an air-conditioning target space. As shown in Fig. 1, the utilization unit 3 mainly includes a utilization-side heat exchanger 31 and a utilization-side fan 32.

The utilization-side heat exchanger 31 functions as a heat absorber (evaporator) for a low-pressure refrigerant in the refrigeration cycle during the cooling operation, and functions as a radiator (condenser) for a high-pressure refrigerant in the refrigeration cycle during the heating operation. A pipe extending from the liquid side of the utilization-side heat exchanger 31 is connected to the liquid-side refrigerant connection pipe 6. A pipe extending from the gas side of the utilization-side heat exchanger 31 is connected to the gas-side refrigerant connection pipe 7. Thus, in the main refrigerant circuit 10, the compressor 21, the heat source-side heat exchanger 23, the heat source-side expansion valve 25, and the utilization-side heat exchanger 31 are connected in a ring shape.

The utilization-side fan 32 generates an air flow in the utilization unit 3 for supplying air in the air-conditioning target space into the utilization-side heat exchanger 31, causing the air to be heat-exchanged with a refrigerant in the utilization-side heat exchanger 31, and then discharging the air to the air-conditioning target space. The utilization-side fan 32 is rotationally driven by a utilization-side fan motor 32a.

The utilization unit 3 includes a utilization unit controller 30 that controls the operation of each component forming the utilization unit 3. The utilization unit controller 30 forms the control unit 70. The utilization unit controller 30 is, for example, a microcomputer including a CPU, a memory, and the like. The utilization unit controller 30 is connected to the heat source unit controller 20 of the heat source unit 2 via a communication line, and transmits and receives control signals and the like.

(1-3) Remote controller 8

The remote controller 8 is disposed in an air-conditioning target space or in a specific space in a building having an air-conditioning target space. The remote controller 8 functions as an input device for a user of the refrigeration cycle apparatus 100 to input various instructions to the refrigeration cycle apparatus 100. For example, the user operates the remote controller 8 to switch the operation state (heating operation or cooling operation) of the refrigeration cycle apparatus 100 or adjust the set temperature of the air-conditioning target space. The remote controller 8 also functions as a display device for displaying an operation state of the refrigeration cycle apparatus 100 and predetermined notification information. The remote controller 8 is connected to the heat source unit controller 20 and the utilization unit controller 30 via a communication line, and mutually transmits and receives signals.

(1-4) Control unit 70

In the refrigeration cycle apparatus 100, the heat source unit controller 20 and the utilization unit controller 30 are connected to each other via a communication line to form the control unit 70 that is hardware for controlling the operation of the refrigeration cycle apparatus 100. The control by the control unit 70 is realized by the heat source unit controller 20 and the utilization unit controller 30 operating integrally.

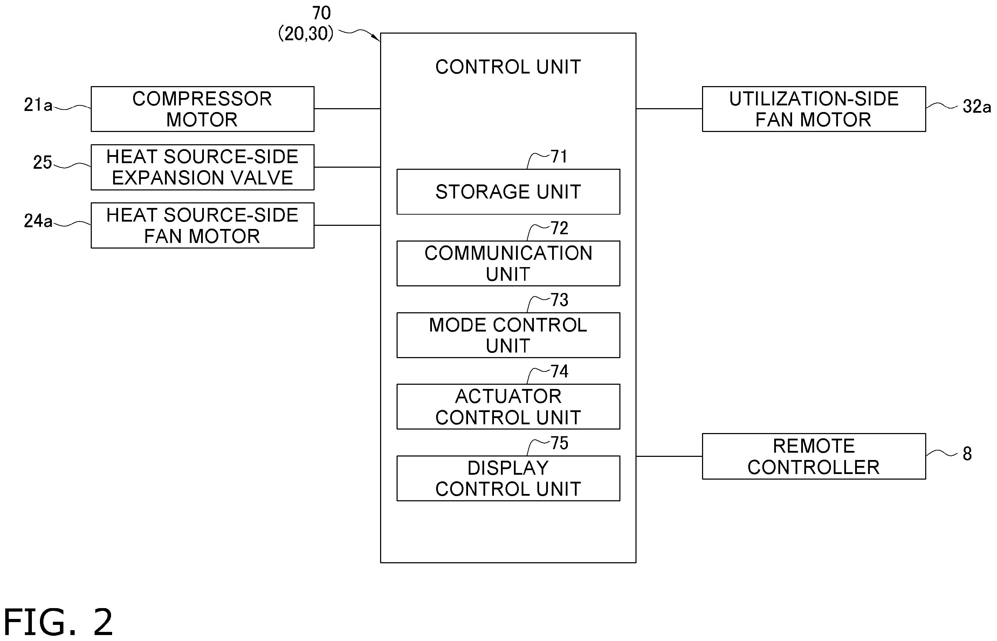

As shown in Fig. 2, the control unit 70 is electrically connected to actuators included in the heat source unit 2. The actuators included in the heat source unit 2 are, to be specific, the compressor motor 21a of the compressors 21, the heat source-side expansion valve 25, and the heat source-side fan motor 24a of the heat source-side fan 24. The control unit 70 is also electrically connected to the remote controller 8 and an actuator included in the utilization unit 3. The actuator included in the utilization unit 3 is, to be specific, the utilization-side fan motor 32a of the utilization-side fan 32.

As shown in Fig. 2, the control unit 70 mainly includes a storage unit 71, a communication unit 72, a mode control unit 73, an actuator control unit 74, and a display control unit 75. Each of these elements realizes a specific function of the control unit 70. The control unit 70 executes a control program stored in a ROM, a RAM, a flash memory, or the like to execute these functions.

The storage unit 71 stores predetermined information in a predetermined storage area in response to a request from another element of the control unit 70. The predetermined information is, for example, a result of calculation performed by the control unit 70 and a command input to the remote controller 8.

The communication unit 72 functions as a communication interface for transmitting and receiving signals to and from each device connected to the control unit 70. The communication unit 72 transmits a predetermined signal to a designated actuator in response to a request from the actuator control unit 74. The communication unit 72 receives a signal output from the remote controller 8 or the like, and requests the storage unit 71 to store the signal in a predetermined storage area.

The mode control unit 73 switches the operating mode of the refrigeration cycle apparatus 100, for example.

The actuator control unit 74 controls the operation of each actuator included in the refrigeration cycle apparatus 100 on the basis of a control program. For example, the actuator control unit 74 controls, in real time, the number of rotations of the compressor 21, the opening degree of the heat source-side expansion valve 25, the number of rotations of the heat source-side fan 24, the number of rotations of the utilization-side fan 32, and the like in accordance with the set temperature or the like.

The display control unit 75 is a functional unit that controls the operation of the remote controller 8 as the display device. The display control unit 75 causes the remote controller 8 to output predetermined information in order to notify the user of, for example, information related to the operation state and situation of the refrigeration cycle apparatus 100. For example, the display control unit 75 causes the remote controller 8 to display information of the operating mode, the set temperature, and the like on the display.

(2) Operating mode of refrigeration cycle apparatus 100

The refrigeration cycle apparatus 100 that is an air-conditioning apparatus is operated in a cooling operating mode or a heating operating mode to adjust the temperature and humidity of air in an air-conditioning target space. The control unit 70 determines which of the cooling operating mode or the heating operating mode is used for operation on the basis of an instruction input to the remote controller 8 by the user.

(2-1) Cooling operating mode

In the cooling operating mode, the control unit 70 sets the four-way switching valve 22 to the cooling operation connection state to perform the cooling operation in the air-conditioning target space. In the cooling operating mode, the control unit 70 controls, for example, the number of rotations of the compressor 21 so that the evaporation temperature of the refrigerant in the main refrigerant circuit 10 becomes a target evaporation temperature.

In the cooling operating mode, the gas refrigerant discharged from the compressor 21 of the heat source unit 2 passes through the first pipe 51 and the four-way switching valve 22, and flows through the heat source-side heat exchanger 23. The refrigerant flowing through the heat source-side heat exchanger 23 radiates heat or condenses by heat exchange with outdoor air, and then flows toward the heat source-side expansion valve 25. The control unit 70 controls the opening degree of the heat source-side expansion valve 25 positioned between the heat source-side heat exchanger 23 and the utilization-side heat exchanger 31 so that conditions such as the degree of subcooling of the heat source-side heat exchanger 23 and the degree of superheating of the utilization-side heat exchanger 31 reaching predetermined target values are satisfied.

The refrigerant decompressed by the heat source-side expansion valve 25 passes through the liquid-side shutoff valve 28 and the liquid-side refrigerant connection pipe 6, flows into the utilization unit 3, and flows through the utilization-side heat exchanger 31. The refrigerant flowing through the utilization-side heat exchanger 31 absorbs heat or evaporates by heat exchange with the air in the air-conditioning target space, then flows through the gas-side refrigerant connection pipe 7, and flows into the heat source unit 2 through the gas-side shutoff valve 29. The refrigerant having flowed into the heat source unit 2 passes through the four-way switching valve 22, the third pipe 53, the accumulator 26, and the second pipe 52, and is again sucked into the compressor 21. In the accumulator 26, the liquid refrigerant that has not been evaporated in the utilization-side heat exchanger 31 is stored as an excessive refrigerant.

(2-2) Heating operating mode

In the heating operating mode, the control unit 70 sets the four-way switching valve 22 to the heating operation connection state to perform the heating operation in the air-conditioning target space. In the heating operating mode, the control unit 70 controls the number of rotations of the compressor 21 so that the condensation temperature of the refrigerant in the main refrigerant circuit 10 becomes a target condensation temperature.

In the heating operating mode, the gas refrigerant discharged from the compressor 21 of the heat source unit 2 passes through the first pipe 51, the four-way switching valve 22, the gas-side shutoff valve 29, and the gas-side refrigerant connection pipe 7, flows into the utilization unit 3, and flows through the utilization-side heat exchanger 31. The refrigerant flowing through the utilization-side heat exchanger 31 radiates heat or condenses by heat exchange with the air in the air-conditioning target space, then flows through the liquid-side refrigerant connection pipe 6, and flows into the heat source unit 2 from the liquid-side shutoff valve 28. The refrigerant flowing into the heat source unit 2 is decompressed by the heat source-side expansion valve 25. The control unit 70 controls the opening degree of the heat source-side expansion valve 25 positioned between the utilization-side heat exchanger 31 and the heat source-side heat exchanger 23 so that conditions such as the degree of subcooling of the utilization-side heat exchanger 31 and the degree of superheating of the heat source-side heat exchanger 23 reaching predetermined target values are satisfied.

The refrigerant decompressed by the heat source-side expansion valve 25 flows through the heat source-side heat exchanger 23. The refrigerant flowing through the heat source-side heat exchanger 23 absorbs heat or evaporates by heat exchange with outdoor air, then passes through the four-way switching valve 22, the third pipe 53, the accumulator 26, and the second pipe 52, and is again sucked into the compressor 21. In the accumulator 26, the liquid refrigerant that has not been evaporated in the heat source-side heat exchanger 23 is stored as an excessive refrigerant.

(3) Detailed configuration

The circulating refrigerant amount and the staying refrigerant amount are defined as follows. The circulating refrigerant amount is the weight of a circulating refrigerant that is a refrigerant circulating in the main refrigerant circuit 10 during the operation of the refrigeration cycle apparatus 100. The staying refrigerant amount is the weight of a staying refrigerant that is a liquid refrigerant stored in the accumulator 26 during the operation of the refrigeration cycle apparatus 100. The staying refrigerant does not circulate in the main refrigerant circuit 10 during the operation of the refrigeration cycle apparatus 100. The gas refrigerant in the accumulator 26 is part of the circulating refrigerant and has the same composition as the circulating refrigerant. The temperature of the gas refrigerant in the accumulator 26 is the same as the temperature of the staying refrigerant. For example, in a case where the temperature of the staying refrigerant is -40°C, the refrigerant of -40°C flows into the accumulator 26, and the gas refrigerant of -40°C flows out from the accumulator 26. The temperature of the staying refrigerant is the same as the temperature of gas outside the accumulator 26.

A space in which the refrigerant in the main refrigerant circuit 10 is sealed is regarded as one container, and this container is referred to as a refrigerant circuit container. In the refrigerant circuit container, a gaseous circulating refrigerant and a liquid staying refrigerant exist in a gas-liquid equilibrium state. When the circulating refrigerant amount in the refrigerant circuit container is W1 and the staying refrigerant amount in the refrigerant circuit container is W2, a sealed refrigerant amount W3, which is the weight of the refrigerant sealed in the main refrigerant circuit 10, is expressed by the following expression (I).

$$W3 = W1 + W2 \ ... \ (I)$$

The sealed refrigerant amount W3 is a value that can be measured when the main refrigerant circuit 10 is filled with a refrigerant. The staying refrigerant amount W2 is, for example, a product of the effective volume of the accumulator 26 and the saturated liquid density of a refrigerant at a pressure of the refrigerant sucked into the compressor 21. Further, the staying refrigerant amount W2 may be calculated on the basis of the height of the liquid level of a liquid refrigerant stored in the accumulator 26. The height of the liquid level of the liquid refrigerant is measured using, for example, a liquid level gauge attached to the accumulator 26.

The gas refrigerant weight ratio in the refrigerant circuit container is referred to as refrigerant quality. The refrigerant quality Q is expressed by the following expression (II) or (III).

$$Q = W1/(W1 + W2) \ ... \ (II)$$

$$Q = (W3 - W2)/W3 \ ... \ (III)$$

The range of the refrigerant quality Q is equal to or larger than 0 and does not exceed 1. In the refrigeration cycle apparatus 100, the refrigerant quality exceeds a predetermined value determined in accordance with the kind of a refrigerant sealed in the main refrigerant circuit 10. Specifically, the operation of the refrigeration cycle apparatus 100 is controlled or the main refrigerant circuit 10 is designed such that the refrigerant quality exceeds the predetermined value.

For example, the control unit 70 controls a parameter related to the wetness of a mixed refrigerant at the inlet of the accumulator 26 so that the refrigerant quality exceeds the predetermined value. In this case, the control unit 70 adjusts the opening degree of the heat source-side expansion valve 25 and the number of rotations of the heat source-side fan 24 so that the refrigerant quality exceeds the predetermined value. In addition, the effective volume of the accumulator 26 is designed to be equal to or smaller than a predetermined value such that the refrigerant quality exceeds the predetermined value.

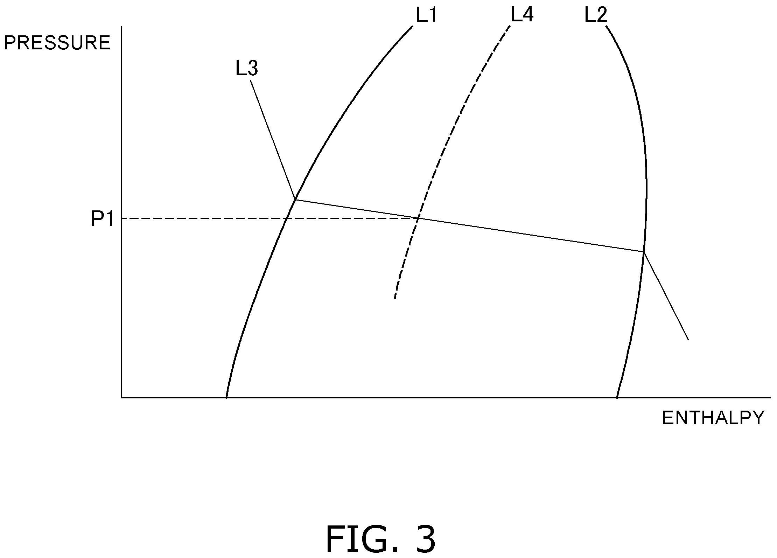

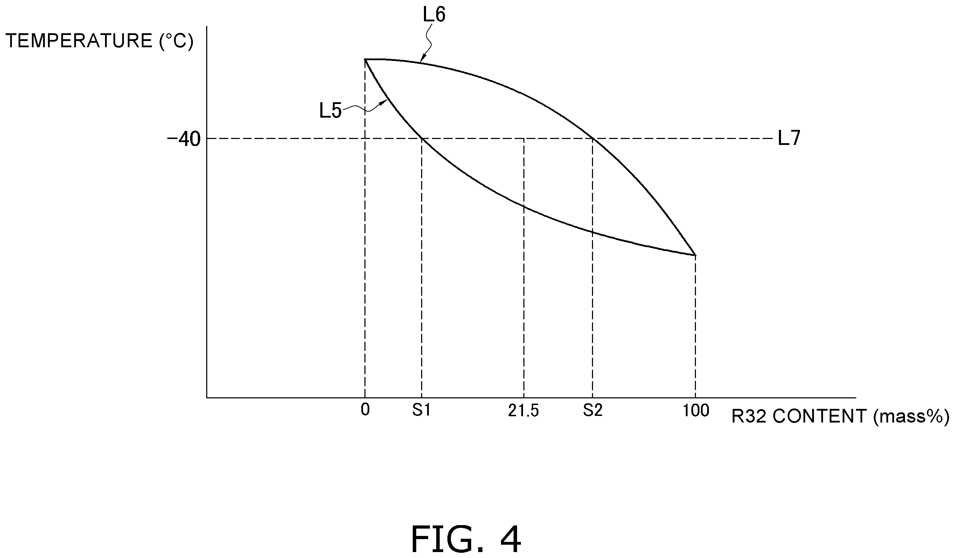

According to the expression (III), as the refrigerant quality is higher, the staying refrigerant amount is smaller. Therefore, for the reason described later, as the refrigerant quality is higher, the deviation between the composition of the circulating refrigerant and the base composition is smaller. The base composition is the composition of the non-azeotropic refrigerant mixture when the non-azeotropic refrigerant mixture is sealed in the main refrigerant circuit 10. Next, the deviation between the composition of the circulating refrigerant and the base composition will be described with reference to Fig. 3 and Fig. 4. Hereinafter, it is assumed that the mixed refrigerant sealed in the main refrigerant circuit 10 is R454C. R454C contains 21.5 mass% of R32 and 78.5 mass% of R1234yf. Therefore, the base composition of the mixed refrigerant sealed in the main refrigerant circuit 10 includes 21.5 mass% of R32 and 78.5 mass% of R1234yf.

Fig. 3 is a Mollier diagram in which a saturated liquid line L1 and a dry saturated vapor line L2 for R454C are illustrated. A solid line L3 is an isotherm of -40°C for R454C. A dotted line L4 represents a state of R454C at predetermined refrigerant quality. A pressure P1 at the intersection of the solid line L3 and the dotted line L4 is a pressure of R454C at -40°C at predetermined refrigerant quality.

Fig. 4 is a vapor-liquid equilibrium curve of a mixed refrigerant of R32 and R1234yf at the pressure P1 of Fig. 3. The horizontal axis of Fig. 4 represents an R32 content (0 mass% to 100 mass%) in the mixed refrigerant. The vertical axis of Fig. 4 represents a temperature of the mixed refrigerant. Fig. 4 shows a boiling point curve L5 and a dew point curve L6. The region at a temperature lower than the boiling point curve L5 is a liquid phase. The region at a temperature higher than the dew point curve L6 is a gas phase. The region between the boiling point curve L5 and the dew point curve L6 is a gas-liquid mixture phase.

As shown in Fig. 4, the mixed refrigerant of the base composition with an R32 content of 21.5 mass% is in a gas-liquid two-phase state at a temperature of -40°C. An R32 content S1 at the intersection of a straight line L7 of a temperature of -40°C and the boiling point curve L5 is an R32 content in the staying refrigerant. An R32 content S2 at the intersection of the straight line L7 of a temperature of -40°C and the dew point curve L6 is an R32 content in the circulating refrigerant. In the refrigeration cycle apparatus 100, the refrigerant quality is limited within the predetermined range such that a difference between the R32 content S2 in the circulating refrigerant and the R32 content in the mixed refrigerant of the base composition (21.5 mass%) is equal to or smaller than the predetermined value.

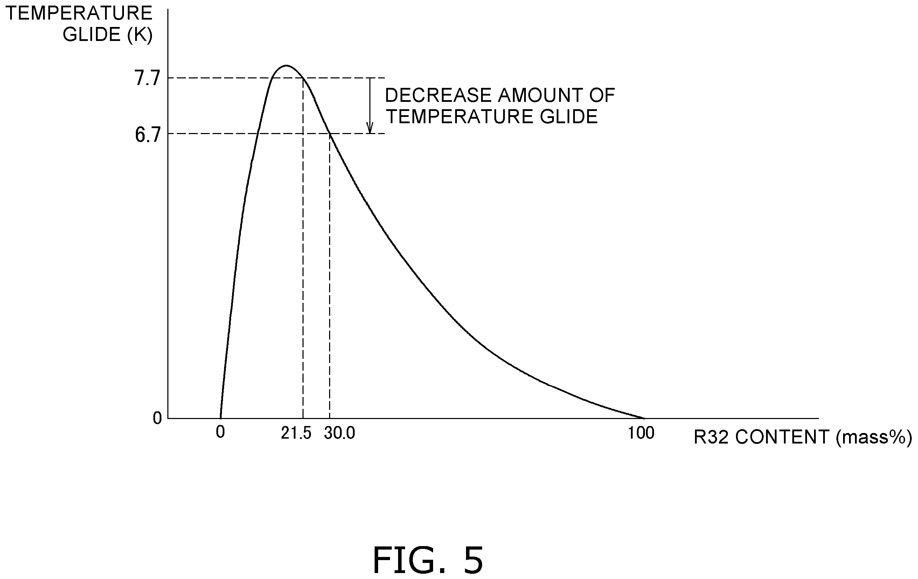

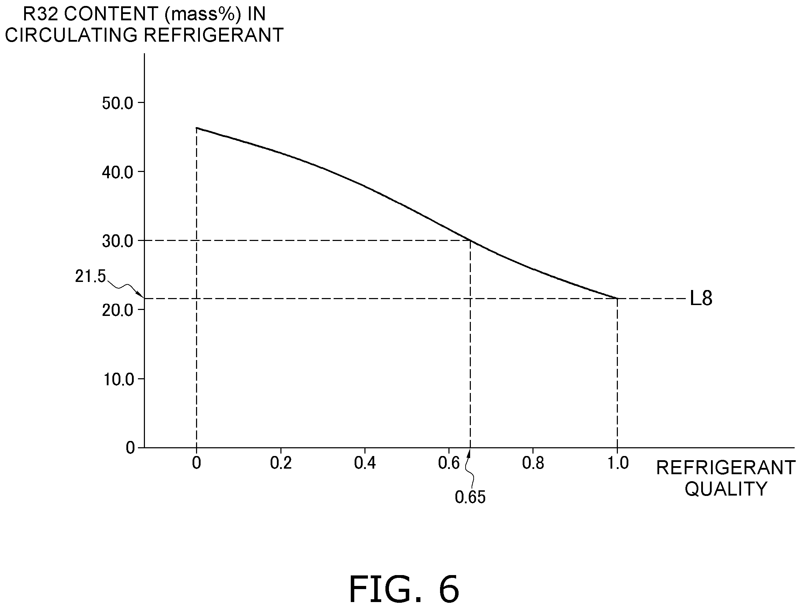

Next, a method of determining the range of the refrigerant quality will be described with reference to Fig. 5 and Fig. 6. The horizontal axis of Fig. 5 represents an R32 content (mass%) in the mixed refrigerant of R32 and R1234yf. The vertical axis of Fig. 5 represents a temperature glide of the mixed refrigerant. The temperature glide is a difference between a saturated gas temperature of the refrigerant and a saturated liquid temperature of the refrigerant. Hereinafter, the saturated gas temperature of the refrigerant is a condensation temperature of the refrigerant. The horizontal axis of Fig. 6 represents the refrigerant quality of the refrigerant sealed in the main refrigerant circuit 10. The vertical axis of Fig. 6 represents an R32 content (mass%) in the circulating refrigerant. Fig. 6 shows the R32 content in the mixed refrigerant of the base composition (21.5 mass%) by a straight line L8.

The boiling point of R1234yf is higher than the boiling point of R32. Therefore, the R1234yf content in the staying refrigerant tends to be higher than the R1234yf content in the circulating refrigerant. In addition, the R32 content in the circulating refrigerant tends to be higher than the R32 content in the staying refrigerant. Therefore, as the refrigerant quality is smaller, the staying refrigerant amount is larger and the weight of R1234yf contained in the staying refrigerant increases, so that the weight of R1234yf contained in the circulating refrigerant decreases. Therefore, as shown in Fig. 6, as the refrigerant quality is smaller, the R32 content in the circulating refrigerant is larger. As shown in Fig. 5, when the R32 content in the circulating refrigerant exceeds the R32 content in the mixed refrigerant of the base composition (21.5 mass%), the temperature glide decreases. Therefore, as the decrease amount of the temperature glide is smaller, the deviation between the composition of the circulating refrigerant and the base composition is smaller.

In the refrigeration cycle apparatus 100, the range of the refrigerant quality is set such that the decrease amount of the temperature glide is equal to or smaller than 1K. As shown in Fig. 5, when the R32 content in the mixed refrigerant is the R32 content in the mixed refrigerant of the base composition (21.5 mass%), the temperature glide is 7.7K. When the temperature glide is decreased from 7.7K to 6.7K by 1K, the R32 content in the mixed refrigerant is 30.0 mass%. In Fig. 6, when the R32 content in the circulating refrigerant is 30.0 mass%, the refrigerant quality is 0.65. Therefore, when the refrigerant quality is larger than 0.65, the R32 content in the circulating refrigerant is 21.5 mass% to 30.0 mass%, and the temperature glide is 6.7K to 7.7K.

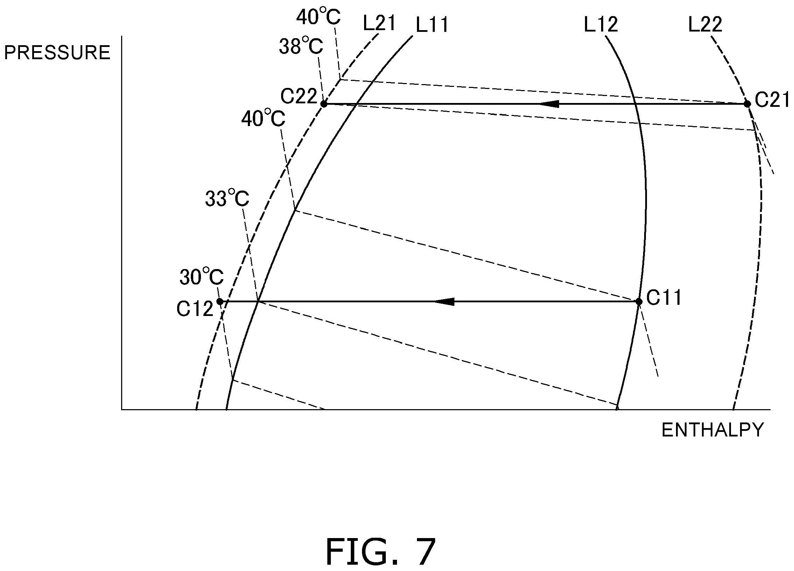

As described above, in the refrigeration cycle apparatus 100, in a case where the mixed refrigerant sealed in the main refrigerant circuit 10 is R454C, the refrigerant quality is set to exceed 0.65. As a result, the decrease amount of the temperature glide is suppressed to be equal to or smaller than 1K, which suppresses deviation between the composition of the circulating refrigerant and the base composition. In this manner, the range of the refrigerant quality is determined on the basis of the decrease amount of the temperature glide. Next, the decrease amount of the temperature glide will be described with reference to Fig. 7.

Fig. 7 is a Mollier diagram of a mixed refrigerant of R32 and R1234yf. The mixed refrigerant has a first composition or a second composition. The mixed refrigerant having the first composition contains 21.5 mass% of R32 and 78.5 mass% of R1234yf. The mixed refrigerant having the second composition contains 60.0 mass% of R32 and 40.0 mass% of R1234yf. Fig. 7 shows a saturated liquid line L11 and a dry saturated vapor line L12 for the mixed refrigerant having the first composition, and a saturated liquid line L21 and a dry saturated vapor line L22 for the mixed refrigerant having the second composition. Fig. 7 shows isotherms of 40°C, 33°C and 30°C for the mixed refrigerant having the first composition, and isotherms of 40°C and 38°C for the mixed refrigerant having the second composition.

The first composition is a composition of R454C, which is the mixed refrigerant sealed in the main refrigerant circuit 10. In other words, the first composition is a base composition. The second composition is an example of the composition of the circulating refrigerant in a case where the liquid refrigerant is stored in the accumulator 26 during the operation of the refrigeration cycle apparatus 100. When the refrigeration cycle apparatus 100 is started, the weight of R1234yf contained in the circulating refrigerant decreases as described above, and thus the composition of the circulating refrigerant gradually changes from the first composition to the second composition.

Fig. 7 shows a condensation process C11 to C12 of the circulating refrigerant having the first composition and a condensation process C21 to C22 of the circulating refrigerant having the second composition. The condensation temperature of the circulating refrigerant having the first composition or the second composition is 40°C. A saturated liquid temperature T1 of the circulating refrigerant having the first composition is 33°C. For the circulating refrigerant having the first composition, the degree of subcooling in the condensation process is set to 3°C. Therefore, a target value T2 of the temperature of the circulating refrigerant at the outlet of the condenser is set to 30°C that is lower than the saturated liquid temperature T1 by 3°C. In a case where the temperature of the circulating refrigerant at the outlet of the condenser is controlled to 30°C that is the same as the target value T2, a saturated liquid temperature T3 of the circulating refrigerant having the second composition after the composition of the circulating refrigerant is changed from the first composition to the second composition is 38°C.

The temperature glide of the circulating refrigerant having the first composition is 7°C. The temperature glide of the circulating refrigerant having the second composition is 2°C. Therefore, in a case where the composition of the circulating refrigerant is changed from the first composition to the second composition, the decrease amount of the temperature glide is 5°C. The decrease amount of the temperature glide corresponds to a value obtained by subtracting the saturated liquid temperature T1 of the circulating refrigerant having the first composition from the saturated liquid temperature T3 of the circulating refrigerant having the second composition.

In the case of Fig. 7, the saturated liquid temperature T3 of the circulating refrigerant having the second composition is 38°C, and thus in a case where the temperature of the circulating refrigerant at the outlet of the condenser is controlled to 30°C, the degree of subcooling is 8°C. Therefore, if the composition of the circulating refrigerant is changed from the first composition to the second composition, the refrigeration cycle apparatus 100 is operated in a state where the degree of subcooling is increased by 5°C, which may deteriorate the performance of the condenser. Therefore, in order to minimize the increase amount of the degree of subcooling even with the change of the composition of the circulating refrigerant, the decrease amount of the temperature glide is preferably as small as possible. In the present embodiment, the allowable maximum amount for the decrease amount of the temperature glide is set to 1K in consideration of variations in the measured values of a thermistor for measuring the temperature of the circulating refrigerant.

(4) Features

(4-1)
Of the refrigerant circulating in the main refrigerant circuit 10, the liquid refrigerant that has not been evaporated in the evaporator is stored in the accumulator 26 as an excessive refrigerant. The refrigerant sealed in the main refrigerant circuit 10 is a non-azeotropic refrigerant mixture that is a mixture of a low-boiling-point refrigerant and a high-boiling-point refrigerant. The boiling point of the high-boiling-point refrigerant is higher than that of the low-boiling-point refrigerant. Therefore, the staying refrigerant that is a liquid refrigerant stored in the accumulator 26 has a higher content of the high-boiling-point refrigerant than the circulating refrigerant circulating in the main refrigerant circuit 10. As a result, when the staying refrigerant is gradually stored in the accumulator 26, the content of the high-boiling-point refrigerant in the circulating refrigerant decreases, which may cause deviation of the composition of the circulating refrigerant from the base composition.

In the refrigeration cycle apparatus 100, the amount of the liquid refrigerant stored in the accumulator 26 is limited in accordance with the kind and amount of a refrigerant sealed in the main refrigerant circuit 10. Specifically, the refrigeration cycle apparatus 100 is controlled such that the refrigerant quality set in accordance with the kind of a refrigerant exceeds the predetermined value.

As the refrigerant quality is higher, the staying refrigerant amount is smaller, and the circulating refrigerant amount is larger. Therefore, with higher refrigerant quality, the deviation of the composition of the circulating refrigerant from the base composition is suppressed. If the composition of the circulating refrigerant deviates from the base composition, the heat exchange performance and controllability of the refrigeration cycle apparatus 100 may be deteriorated. Therefore, the refrigeration cycle apparatus 100 is able to suppress the deterioration of heat exchange performance and controllability.

(4-2)
In the refrigeration cycle apparatus 100, the range of the refrigerant quality is set such that the change amount of the temperature glide at the time of deviation of the composition of the circulating refrigerant from the base composition is equal to or smaller than a predetermined value. Specifically, the range of the refrigerant quality is set such that the decrease amount of the temperature glide is equal to or smaller than 1K. For the reasons described above, as the decrease amount of the temperature glide is larger, the performance of the condenser may be deteriorated. Therefore, the refrigeration cycle apparatus 100 is able to suppress the performance deterioration caused by a change in the composition of the circulating refrigerant.

(4-3)
In the refrigeration cycle apparatus 100, a non-azeotropic refrigerant mixture is sealed in the main refrigerant circuit 10. When the refrigerant such as R1123 contained in the non-azeotropic refrigerant mixture generate radicals, the refrigerant may be changed into other compounds by disproportionation reaction. The disproportionation reaction involves a large release of heat. Therefore, the disproportionation reaction caused by the refrigerant contained in the circulating refrigerant may reduce the reliability of the refrigeration cycle apparatus 100.

The refrigeration cycle apparatus 100 suppresses the deviation of the composition of the circulating refrigerant from the base composition. Therefore, an increase of the content of the refrigerant that is contained in the circulating refrigerant and is likely to cause a disproportionation reaction is suppressed. Consequently, the refrigeration cycle apparatus 100 is able to suppress the deterioration of reliability due to the disproportionation reaction of the refrigerant.

(5) Examples

As shown in Fig. 6, in the refrigeration cycle apparatus 100, the composition of the circulating refrigerant varies depending on the refrigerant quality. **In** order to verify the probability of the change amount of the composition of the circulating refrigerant, there was carried out an experiment of comparing an actually measured value of the composition of the circulating refrigerant and a predicted value of the composition of the circulating refrigerant, as will be described in the following. The actually measured value was obtained by measuring a composition of the circulating refrigerant when the refrigerant quality was a predetermined value. The predicted value was obtained by calculating a change in composition based on the gas-liquid equilibrium state of the refrigerant stored in the accumulator.

(5-1) Configuration of testing machine

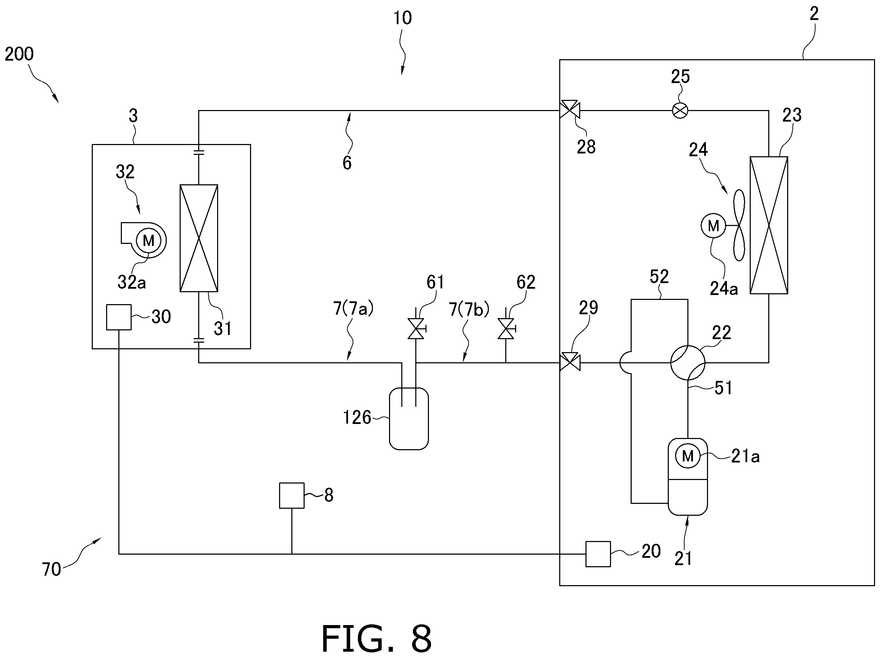

As shown in Fig. 8, a refrigeration cycle apparatus 200 that is a testing machine for measuring an actually measured value of the composition of the circulating refrigerant has a configuration similar to the refrigeration cycle apparatus 100 shown in Fig. 1. However, in the refrigeration cycle apparatus 200, an accumulator 126 is not provided inside the heat source unit 2, but is attached to the gas-side refrigerant connection pipe 7 outside the heat source unit 2. In the heat source unit 2, the second pipe 52 connected to the suction side of the compressor 21 is directly connected to one of the connection ports of the four-way switching valve 22. A liquid level gauge for measuring the volume of the liquid refrigerant stored in the accumulator 126 is attached to the accumulator 126.

The gas-side refrigerant connection pipe 7 is divided into a first connection pipe 7a and a second connection pipe 7b by the accumulator 126. The first connection pipe 7a connects the gas side of the utilization-side heat exchanger 31 and the accumulator 126. The second connection pipe 7b connects the accumulator 126 and the gas-side shutoff valves 29. A first sampling valve 61 and a second sampling valve 62 are attached to the second connection pipe 7b. The first sampling valve 61 is attached to the vicinity of the accumulator 126. The second sampling valve 62 is attached to the vicinity of the gas-side shutoff valve 29.

(5-2) Operating condition of testing machine

The refrigeration cycle apparatus 200 that is a testing machine is an air-conditioning apparatus with a cooling capacity of 4.0 kW. The refrigeration cycle apparatus 200 is operated in a cooling operating mode. The length of the liquid-side refrigerant connection pipe 6 is 5.0 m. The outer diameter of the liquid-side refrigerant connection pipe 6 is 6.4 mm. The length of the gas-side refrigerant connection pipe 7 is 5.0 m. The outer diameter of the gas-side refrigerant connection pipe 7 is 9.5 mm.

The non-azeotropic refrigerant mixture sealed in the main refrigerant circuit 10 of the refrigeration cycle apparatus 200 is R454C. R454C contains 21.5 mass% of R32 and 78.5 mass% of R1234yf.

The main refrigerant circuit 10 is initially filled with a predetermined amount of refrigerant, and is then additionally filled with a predetermined amount of refrigerant so that a liquid refrigerant is accumulated in the accumulator 126. When the additional refrigerant is charged, a parameter related to the wetness of the circulating refrigerant is manually controlled so that the liquid refrigerant is stored in the accumulator 126.

(5-3) Measurement result

The gas refrigerant in the accumulator 126 and the circulating refrigerant were sampled, and the compositions of the refrigerants were measured by gas chromatography, so as to acquire an actually measured value of the composition of the circulating refrigerant. The gas refrigerant in the accumulator 126 was sampled from the first sampling valve 61. The circulating refrigerant was sampled from the second sampling valve 62.

As shown in the following table, for each of Examples 1 to 3, an actually measured value of the composition of the gas refrigerant in the accumulator 126, an actually measured value of the composition of the circulating refrigerant, and a predicted value of the composition of the circulating refrigerant were acquired or calculated.

[Table 1]

|  | Example 1 | Example 2 | Example 3 |
|---|---|---|---|
| Refrigerant circulation amount (kg/h) | 59.3 | 66.6 | 71.2 |
| Refrigerant filling amount (kg) | 1.8 | 2.63 | 3.23 |

(continued)

|  | Example 1 | Example 2 | Example 3 |
|---|---|---|---|
| Liquid storage amount (kg) | 0.60 | 1.47 | 2.11 |
| Refrigerant quality | 0.667 | 0.441 | 0.347 |
| Actually measured value of composition of gas refrigerant (R32/R1234yf) | 26.3 mass%/73.7 mass% | 32.4 mass%/67.6 mass% | 34.8 mass%/65.2 mass% |
| Actually measured value of composition of circulating refrigerant (R32/R1234yf) | 25.9 mass%/74.1 mass% | 31.8 mass%/68.2 mass% | 34.3 mass%/65.7 mass% |
| Predicted value of composition of circulating refrigerant (R32/R1234yf) | 26.7 mass%/73.3 mass% | 30.5 mass%/69.5 mass% | 32.9 mass%/67.1 mass% |

In the above table, the refrigerant circulation amount is the weight of a refrigerant circulating in the main refrigerant circuit 10 per hour. The refrigerant filling amount is the weight of a refrigerant filled in the main refrigerant circuit 10 after the refrigerant is additionally filled. The liquid storage amount is the weight of a liquid refrigerant stored in the accumulator 126. The refrigerant quality is calculated from the following expression (IV) on the basis of the above-described expression (III).

Refrigerant quality = (refrigerant filling amount-liquid storage amount)/refrigerant filling amount          (IV)

The refrigerant quality of Examples 1 to 3 is different from each other. In the above table, for the actually measured value and predicted value of the composition, those of R32 content (mass%) and R1234yf content (mass%) are shown sequentially.
As a result of the experiment, it was confirmed that the actually measured value of the composition of the circulating refrigerant was very close to the predicted value of the composition of the circulating refrigerant. In addition, it was confirmed that the actually measured value of the composition of the gas refrigerant in the accumulator 126 was substantially the same as the actually measured value of the composition of the circulating refrigerant.
Further, it was confirmed that as the refrigerant quality was higher, the difference between the actually measured value of the R32 content in the composition of the circulating refrigerant and the R32 content in the base composition (21.5 mass%) was smaller. Therefore, it was confirmed that as the refrigerant quality was higher, the deviation of the composition of the circulating refrigerant from the base composition was suppressed.

(6) Modification

In the embodiment, the mixed refrigerant sealed in the main refrigerant circuit 10 is R454C. R454C contains 21.5 mass% of R32 and 78.5 mass% of R1234yf. In this case, the R32 content is limited to equal to or smaller than 30.0 mass% so that the decrease amount of the temperature glide at the time of deviation of the composition of the circulating refrigerant from the base composition is equal to or smaller than 1K. As a result, the refrigerant quality is set to exceed 0.65.
The following will describe the setting of the refrigerant quality in a case where the first to third mixed refrigerants, which are mixed refrigerants other than R454C, are sealed in the main refrigerant circuit 10. The method of determining the range of the refrigerant quality in the case of using the first to third mixed refrigerants is the same as the method of determining the range of the refrigerant quality in the case of using the R454C shown in Fig. 5 and Fig. 6.

(6-1) First mixed refrigerant

The first mixed refrigerant contains R1132(E) and R1234yf. The base composition of the first mixed refrigerant includes 23.0 mass% of R1132(E) and 77.0 mass% of R1234yf. In a case where the R1132(E) content in the first mixed refrigerant is the R1132(E) content in the first mixed refrigerant of the base composition (23.0 mass%), the temperature glide is 7.0K. When the temperature glide is decreased from 7.0K to 6.0K by 1K, the R1132(E) content in the first mixed refrigerant is 45.0 mass%.
In this case, the R1132(E) content is limited to equal to or smaller than 45.0 mass% so that the decrease amount of the temperature glide at the time of deviation of the composition of the circulating refrigerant from the base composition is equal to or smaller than 1K. Therefore, in the case of using the first mixed refrigerant, the refrigerant quality is set to exceed 0.15.

(6-2) Second mixed refrigerant

The second mixed refrigerant contains R1132(E), R1234yf, and R32. The base composition of the second mixed refrigerant includes 22.0 mass% of R1132(E), 56.0 mass% of R1234yf, and 22.0 mass% of R32. In a case where the R1132(E) content in the second mixed refrigerant is the R1132(E) content in the second mixed refrigerant of the base composition (22.0 mass%), the temperature glide is 5.3K. When the temperature glide is decreased from 5.3K to 4.3K by 1K, the R1132(E) content in the second mixed refrigerant is 32.0 mass%.

In this case, the R1132(E) content is limited to equal to or smaller than 32.0 mass% so that the decrease amount of the temperature glide at the time of deviation of the composition of the circulating refrigerant from the base composition is equal to or smaller than 1K. Therefore, in the case of using the second mixed refrigerant, the refrigerant quality is set to exceed 0.22.

(6-3) Third mixed refrigerant

The third mixed refrigerant contains R1123 and R1234yf. The base composition of the third mixed refrigerant includes 34.0 mass% of R1123 and 66.0 mass% of R1234yf. In a case where the R1123 content in the third mixed refrigerant is the R1123 content in the third mixed refrigerant of the base composition (34.0 mass%), the temperature glide is 8.0K. When the temperature glide is decreased from 8.0K to 7.0K by 1K, the R1123 content in the third mixed refrigerant is 61.0 mass%.

In this case, the R1123 content is limited to equal to or smaller than 61.0 mass% so that the decrease amount of the temperature glide at the time of deviation of the composition of the circulating refrigerant from the base composition is equal to or smaller than 1K. Therefore, in the case of using the third mixed refrigerant, the refrigerant quality is set to exceed 0.12.

While embodiments of the present disclosure have been described above, it will be understood that various changes in form and detail may be made therein without departing from the spirit and scope of the present disclosure as set forth in the claims.

REFERENCE SIGNS LIST

    10    main refrigerant circuit (refrigerant circuit)
    21    compressor
    23    heat source-side heat exchanger (evaporator, condenser)
    25    heat source-side expansion valve (expansion mechanism)
    26    accumulator
    31    utilization-side heat exchanger (condenser, evaporator)
    70    control unit
    100   refrigeration cycle apparatus

CITATION LIST

PATENT LITERATURE

Patent Literature 1: JP2015-200431A

Claims

1.  A refrigeration cycle apparatus (100), comprising:

        a compressor (21);
        a condenser (23);
        an expansion mechanism (25);
        an evaporator (31);
        an accumulator (26); and

a refrigerant circuit (10) in which the compressor, the condenser, the expansion mechanism, the evaporator, and the accumulator are connected in a ring shape, and in which a mixed refrigerant is sealed, wherein
when an amount of the mixed refrigerant sealed in the refrigerant circuit is a first amount and an amount of a liquid refrigerant stored in the accumulator is a second amount, a first value obtained by dividing a value obtained by subtracting the second amount from the first amount by the first amount exceeds a value determined in accordance with the mixed refrigerant, and
the mixed refrigerant is a non-azeotropic refrigerant mixture.

2. The refrigeration cycle apparatus according to claim 1, wherein
the second amount is a product of an effective volume of the accumulator and a saturated liquid density of the mixed refrigerant at a pressure of the mixed refrigerant sucked into the compressor.

3. The refrigeration cycle apparatus according to claim 1 or 2, wherein

the mixed refrigerant sealed in the refrigerant circuit has a first composition,
when the liquid refrigerant is stored in the accumulator, the mixed refrigerant circulating in the refrigerant circuit has a second composition,
T1 is a saturated liquid temperature of the mixed refrigerant having the first composition,
T2 is a target value of a temperature of the mixed refrigerant having the first composition at an outlet of the condenser,
T3 is a saturated liquid temperature of the mixed refrigerant having the second composition after a composition of the mixed refrigerant is changed from the first composition to the second composition in a case where the temperature of the mixed refrigerant at the outlet of the condenser is controlled to T2, and
the first value is set such that a second value obtained by subtracting T1 from T3 is equal to or smaller than 1K.

4. The refrigeration cycle apparatus according to any one of claims 1 to 3, wherein

the mixed refrigerant contains 21.5 mass% of R32 and 78.5 mass% of R1234yf, and
the first value exceeds 0.65.

5. The refrigeration cycle apparatus according to any one of claims 1 to 3, wherein

the mixed refrigerant contains 23.0 mass% of R1132(E) and 77.0 mass% of R1234yf, and
the first value exceeds 0.15.

6. The refrigeration cycle apparatus according to any one of claims 1 to 3, wherein

the mixed refrigerant contains 22.0 mass% of R1132(E), 56.0 mass% of R1234yf, and 22.0 mass% of R32, and
the first value exceeds 0.22.

7. The refrigeration cycle apparatus according to any one of claims 1 to 3, wherein

the mixed refrigerant contains 34.0 mass% of R1123 and 66.0 mass% of R1234yf, and
the first value exceeds 0.12.

8. The refrigeration cycle apparatus according to any one of claims 1 to 7, further comprising a control unit (70) configured to control a parameter related to wetness of the mixed refrigerant at an inlet of the accumulator.

9. The refrigeration cycle apparatus according to any one of claims 1 to 8, wherein
the accumulator has an effective volume equal to or smaller than a predetermined value.

FIG. 1

EP 4 596 996 A1

FIG. 2

FIG. 3

FIG. 4

FIG. 5

FIG. 6

EP 4 596 996 A1

FIG. 7

FIG. 8

EP 4 596 996 A1

# EP 4 596 996 A1

## INTERNATIONAL SEARCH REPORT

International application No.

**PCT/JP2023/034635**

### A. CLASSIFICATION OF SUBJECT MATTER

*F25B 1/00*(2006.01)i; *F25B 43/00*(2006.01)i
FI:    F25B1/00 396B; F25B1/00 385Z; F25B43/00 B

According to International Patent Classification (IPC) or to both national classification and IPC

### B. FIELDS SEARCHED

Minimum documentation searched (classification system followed by classification symbols)

F25B1/00; F25B43/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2002-39648 A (MITSUBISHI ELECTRIC CORP) 06 February 2002 (2002-02-06) paragraphs [0034]-[0059], fig. 1-5 | 1-2, 8-9 |
| A | | 3-7 |
| A | JP 2002-89978 A (DAIKIN IND LTD) 27 March 2002 (2002-03-27) entire text, all drawings | 1-9 |
| A | JP 2004-232951 A (MITSUBISHI ELECTRIC CORP) 19 August 2004 (2004-08-19) entire text, all drawings | 1-9 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

22

## INTERNATIONAL SEARCH REPORT
### Information on patent family members

International application No.

**PCT/JP2023/034635**

| Patent document cited in search report | | | Publication date (day/month/year) | Patent family member(s) | | Publication date (day/month/year) |
|---|---|---|---|---|---|---|
| JP | 2002-39648 | A | 06 February 2002 | (Family: none) | | |
| JP | 2002-89978 | A | 27 March 2002 | US 2004/0011062 A1 entire text, all drawings WO 2002/023100 A1 EP 1326057 A1 CN 1455855 A KR 10-2003-0028838 A | | |
| JP | 2004-232951 | A | 19 August 2004 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015200431 A